# EUROPEAN PATENT APPLICATION

(11) **EP 4 645 881 A1**
(43) Date of publication of application: **05.11.2025**
(21) Application number: 24750516.7
(22) Date of filing: 29.01.2024
(51) Int. Cl.: H04N 21/466, H04N 21/45, G06N 3/098, G06N 3/045

(54) **ELECTRONIC DEVICE USING PERSONAL AI MODEL, AND OPERATION METHOD THEREOF**

(30) Priority: 31.01.2023 KR 20230012484; 16.02.2023 KR 20230020740
(71) Applicant: Samsung Electronics Co., Ltd., Suwon-si, Gyeonggi-do 16677 (KR)
(72) Inventor: KIM, Yoonsang, Suwon-si Gyeonggi-do 16677 (KR); KIM, Kwangchoon, Suwon-si Gyeonggi-do 16677 (KR); O, Seunghun, Suwon-si Gyeonggi-do 16677 (KR); HEO, Seon, Suwon-si Gyeonggi-do 16677 (KR); KIM, Gyuhyun, Suwon-si Gyeonggi-do 16677 (KR); KIM, Joonwoo, Suwon-si Gyeonggi-do 16677 (KR); KIM, Hyunsoo, Suwon-si Gyeonggi-do 16677 (KR); YOO, Minju, Suwon-si Gyeonggi-do 16677 (KR)
(74) Representative: HGF
(86) International application number: PCT/KR2024/001344
(87) International publication number: WO 2024/162717

(57) **Abstract**

According to an embodiment, an electronic device (201) may include a memory (230), a communication circuit (250), and a processor (220). According to an embodiment, the processor may be configured to identify a use pattern of specified media among all media stored in the memory, and determine a score of each of the specified media on the basis of the use pattern. According to an embodiment, the processor may be configured to identify a feature corresponding to a feature of each of the specified media by using a main AI model stored in the memory. According to an embodiment, the processor may be configured to acquire a personalized first AI model trained on the basis of the score and the feature. According to an embodiment, the processor may be configured to determine a first preference of each of multiple first media on the basis of the first AI model. According to an embodiment, the processor may be configured to perform a function related to the multiple first media on the basis of the first preference. Various other embodiments are possible.

## Description

### [Technical Field]

The disclosure relates to an electronic device using a personal AI model and an operation method thereof.

### [Background Art]

For many people in modern times, portable digital communication devices have become essential items. Consumers want to be provided with various high-quality services that the consumers want anytime and anywhere by using portable digital communication devices.

A recognition service using an artificial intelligence (AI) technology may be a service of recognizing, based on an interface implemented by portable digital communication devices, various types of media by an AI model trained through a deep learning scheme, and providing consumers with various content services by using a result of the recognition. To provide a high-quality AI recognition service to consumers, a technology of accurately identifying the preference or interest of the user and a technology of providing an appropriate content service corresponding to the identified user's intention is required.

### [Detailed Description of the Invention]

### [Technical Problem]

### [Technical Solution]

According to an embodiment, an electronic device 201 may include memory 230, a communication circuit 250, and a processor 220. The processor according to an embodiment may be configured to identify a use pattern of specified media items among all media items stored in the memory, and based on the use pattern, determine a score of each of the specified media items. The processor according to an embodiment may be configured to identify a feature corresponding to a characteristic of each of the specified media items by using a main AI model stored in the memory. The processor according to an embodiment may be configured to acquire a personalized first AI model trained based on the score and the feature. The processor according to an embodiment may be configured to, based on the first AI model, determine a first preference of each of multiple first media items. The processor according to an embodiment may be configured to, based on the first preference, perform a function related to the multiple first media items.

An operation method of an electronic device 201 according to an embodiment may include identifying a use pattern of specified media items among all media items stored in the electronic device, and based on the use pattern, determining a score of each of the specified media items. The operation method of the electronic device according to an embodiment may include extracting a feature corresponding to a characteristic of each of the specified media items by using a main AI model stored in the electronic device. The operation method of the electronic device according to an embodiment may include acquiring a personalized first AI model trained based on the score and the feature. The operation method of the electronic device according to an embodiment may include, based on the first AI model, determining a first preference of each of multiple first media items. The operation method of the electronic device according to an embodiment may include, based on the first preference, performing a function related to the multiple first media items.

A non-transitory recording medium 130 according to an embodiment may store instructions which can perform identifying a use pattern of specified media items among all media items stored in an electronic device 201, and based on the use pattern, determining a score of each of the specified media items, extracting a feature corresponding to a characteristic of each of the specified media items by using a main AI model stored in the electronic device, acquiring a personalized first AI model trained based on the score and the feature, determining a first preference of each of multiple first media items, based on the first AI model, and performing a function related to the multiple first media items, based on the first preference.

### [Advantageous Effects]

### [Brief Description of Drawings]

FIG. 1 is a block diagram illustrating an electronic device in a network environment according to various embodiments.
FIG. 2A is a block diagram illustrating a system including an electronic device, multiple external electronic devices, and a server according to an embodiment.
FIG. 2B is a flowchart illustrating an operation method of an electronic device according to an embodiment.
FIG. 3 is a block diagram illustrating an AI service manager executed in an electronic device according to an embodiment.
FIG. 4A is a flowchart illustrating a method of training a personal AI model by an electronic device according to an embodiment.
FIG. 4B is a flowchart illustrating a method in which the electronic device trains a personal AI model by using information on media received from the outside according to an embodiment.
FIG. 5 illustrates a method of training a personal AI model by an electronic device according to an embodiment.
FIG. 6 illustrates a method in which an electronic device obtains a feature and a score for media for training a personal AI model according to an embodiment.
FIG. 7 is a flowchart illustrating a method of training a personal AI model by an electronic device when the state of the electronic device satisfies a specified condition according to an embodiment.
FIG. 8A is a flowchart illustrating a method in which an electronic device performs a function related to media items by using a personal AI model according to an embodiment.
FIG. 8B is a flowchart illustrating a method of classify media items by using a personal AI model by an electronic device according to an embodiment.
FIG. 9A illustrates an operation of identifying preferences of media items by using a personal AI model by an electronic device according to an embodiment.
FIG. 9B illustrates an operation of identifying preferences of media items by using an AI model of other person by an electronic device according to an embodiment.
FIG. 9C illustrates an operation of identifying preferences of media items by using an AI model for each group by an electronic device according to an embodiment.
FIG. 10 illustrates an AI service manager for managing multiple AI models according to an embodiment.
FIG. 11A is a flowchart illustrating a method of performing a function related to media items by using an AI model of other person according to an embodiment.
FIG. 11B is a flowchart illustrating a method of performing a function related to media items by using an AI model of a specific group according to an embodiment.
FIG. 12A is a flowchart illustrating a method of performing a function related to media items by using an AI model of a specific person according to an embodiment.
FIG. 12B is a flowchart illustrating a method of providing a guide to media by using an AI model of a specific person according to an embodiment.
FIG. 13A illustrates a method of identifying an image preferred by a user among multiple images by using a personal AI model according to an embodiment.
FIG. 13B illustrates a method of identifying an image preferred by other person among multiple images by using an AI model of other person according to an embodiment.
FIG. 13C illustrates a method of classifying images according to attributes of multiple images by using a personal AI model according to an embodiment.
FIG. 14 illustrates a method of sharing, using a group-specific AI model, images for each corresponding group according to an embodiment.
FIG. 15A illustrates a method of identifying an image preferred by an expert among multiple images by using an expert AI model according to an embodiment.
FIG. 15B illustrates a method of providing a guide to an image by using an expert AI model according to an embodiment.

### [Mode for Carrying out the Invention]

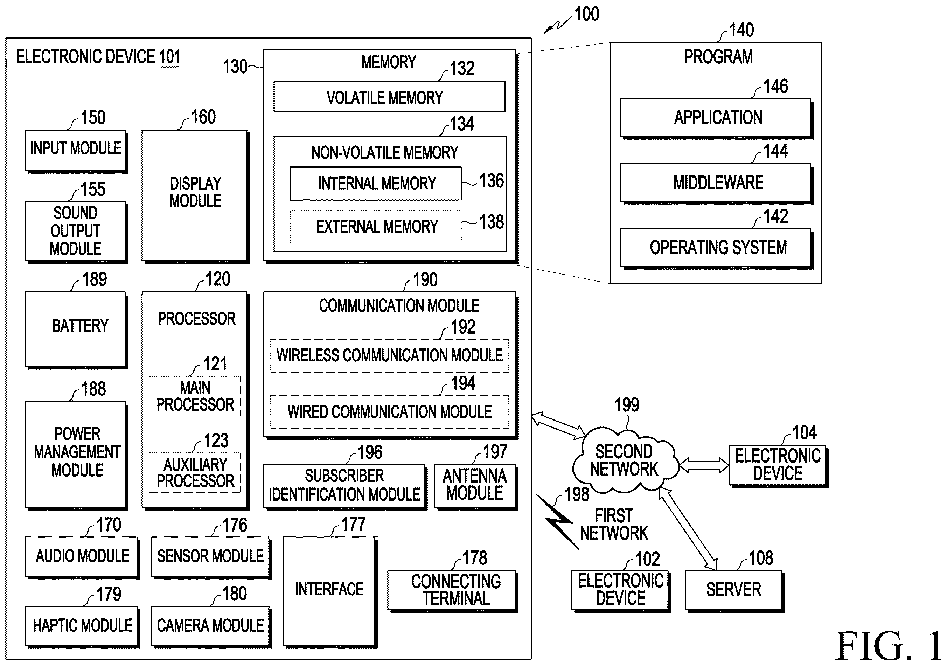

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

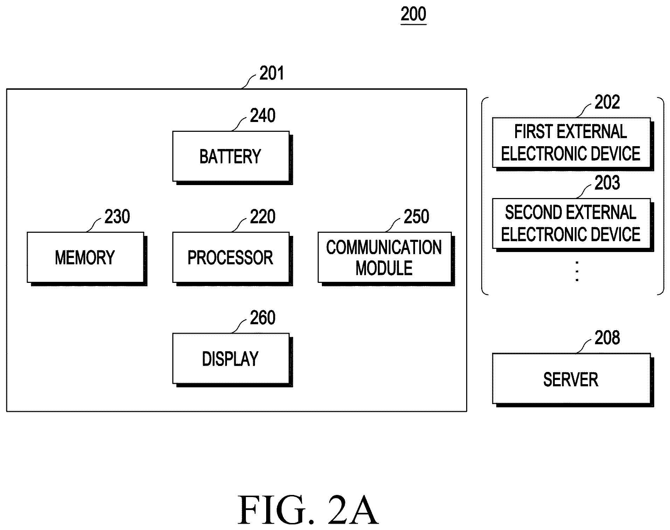

FIG. 2A is a block diagram illustrating a system including an electronic device, multiple external electronic devices, and a server according to an embodiment.

Referring to FIG. 2A, a system 200 according to an embodiment may include an electronic device 201, multiple external electronic devices 202 and 203, and a server 208. For example, the electronic device 201 may be implemented to be identical or similar to the electronic device 101 of FIG. 1. The multiple external electronic devices 202 and 203 may be implemented to be identical or similar to the electronic devices 102 and 104 of FIG. 1. In addition, the server 208 may be implemented to be identical or similar to the server 108 of FIG. 1.

The electronic deice 201 according to an embodiment may transmit or receive data to or from the multiple external electronic devices 202 and 203 and the server 208. For example, the electronic device 201 may receive data of media and/or an AI model from the multiple external electronic devices 202 and 203. In addition, the electronic device 201 may receive data of media and/or an AI model from the server 208.

According to an embodiment, the electronic device 201 may include a processor 220, memory 230, a battery 240, a communication module 250, and a display 260.

According to an embodiment, the processor 220 may control the overall operation of the electronic device 201. The processor 220 may be implemented to be identical or similar to the processor 120 of FIG. 1. According to the implementation, the processor 220 may include a main processor (e.g., the main processor 121 of FIG. 1 or an application processor) or an auxiliary processor (e.g., the auxiliary processor 123 of FIG. 1 or a neural processing unit (NPU)) which can be operated independently or together with the main processor.

According to an embodiment, the processor 220 may execute an AI service manager (or an AI service manager module) for managing a service or a function utilizing artificial intelligence (AI) or an AI model. For example, the AI service manager may be executed in the foreground or the background.

According to an embodiment, the memory 230 (e.g., the memory 130 of FIG. 1) may store data related to the media. For example, the electronic device 201 may mean data related to an image, a video, audio which can be executed in the electronic device 201. In addition, the memory 230 may store an application (e.g., a photo viewing application, a video reproduction application, an audio reproduction application, a file explorer application, a background setting application, and a file sharing application) related to the media.

According to an embodiment, the processor 220 may identify a use pattern of multiple media items among media items stored in the memory 230 (e.g., all media items stored in the memory 230). For example, the processor 220 may identify or monitor an interaction that a user performs viewing, sharing, editing, favorites setting, background setting, and/or deleting of the media through the application related to the media. The processor 220 may determine or identify, based on the user pattern of the media, a score of the corresponding media. For example, the score may mean a score or a value based on the use pattern of the media. For example, the processor 220 may convert the use pattern of the media into the score by using a specified equation. For example, the processor 220 may determine that the higher the score of the media, the user uses the corresponding media more frequently or has more interest.

According to an embodiment, the memory 230 may store a main AI model. For example, the main AI model may be an AI model pre-stored in the electronic device 201. For example, the main AI model may be an AI model which is a reference to an AI model (hereinafter, a personal AI model) personalized, based on the use pattern of the user, to the user of the electronic device 201. For example, the processor 220 may train media determined that the user uses more frequently or has more interest with reference to the main AI model, and obtained (or generate or update) the personal AI model. For example, the processor 220 may store the trained personal AI model in the memory 230. For example, the main AI model and the personal AI model may be implemented as a deep learning-type (e.g., a convolution neural network (CNN)-type) AI model. For example, the processor 220 may perform on-device AI model training and utilization.

According to an embodiment, the processor 220 may extract or identify a feature of each of the multiple media items by using the main AI model stored in the memory 230. For example, when media is input, the main AI model may output a feature corresponding to the media. The feature may be data representing a characteristic of the media recognized by the main AI model. For example, the feature may be represented as a sequence of floats (e.g., a 4 byte float * 512), and may have a value varying according to the attribute (e.g., color, tone, color temperature, or composition) used to classify the media. However, the feature may have a value which does not enable backtracking of the characteristic of the media even when the feature is analyzed.

According to an embodiment, the processor 220 may train, based on the score and the feature of each of the multiple media items, the AI model. The processor 220 may obtain (or generate or update) a personal AI model personalized to the user of the electronic device 201 as a result of the training. For example, the processor 220 may train the personal AI model in the state in which the electronic device 201 is idle or the battery 240 (e.g., the battery 189 of FIG. 1) is being charged.

According to an embodiment, the processor 220 may identify or determine a first preference of each of first media stored in the memory 230 by using the personal AI model. For example, the first preference may mean a preference score or a preference value of each of the first media determined by the personal AI model personalized to the user of the electronic device 201. For example, the first media may be all media items stored in the memory 230 or media items for which the user has requested identification among all media items. Alternatively, the first media may be media satisfying a preconfigured criterion (e.g., media generated at a specific time point, generated for a specific time interval, generated at a specific place, or obtained from a specific person or a specific device) among all media items stored in the memory 230. The processor 220 may store the first preference of each of the first media in the memory 230.

According to an embodiment, the processor 220 may perform, based on the first preference, a function related to the first media. For example, the processor 220 may recommend, based on the first preference, at least one media item among the first media items. For example, the processor 220 may recommend media having a higher preference to the user. For example, the processor 220 may also classify, based on the first preference, the first media. For example, the processor 220 may classify the first media in the order of the first preference.

According to an embodiment, the processor 220 may also classify the first media by using the personal AI model according to a specific person, a specific character, a specific place, or a specific time interval. For example, the processor 220 may separately classify media including a specific person (or a specific character), may separately classify media obtained at a specific place, or may separately classify media obtained during specific time interval.

According to an embodiment, the processor 220 may identify the attribute (e.g., color, tone, color temperature, or composition) of each of the first media by using the personal AI model. For example, the processor 220 may classify, based on the identified attribute, the first media. For example, the processor 220 may classify the first media into at least one media item based on the composition and at least one media item based on the tone or color temperature.

According to an embodiment, the processor 220 may receive, from at least one of the multiple external electronic devices 202 and 203 through the communication module 250, information on the personalized AI model (hereinafter, an AI model of other person) of the user of the corresponding external electronic device. The processor 220 may store the AI model of other person in the memory 230. The processor 220 may identify the preference of the media stored in the memory 230 by using the AI model of other person. The processor 220 may perform, based on the identified preference, a function related to the corresponding media. For example, the processor 220 may transmit the media preferred by other person among the media stored in the memory 230 to the external electronic device.

According to an embodiment, the electronic device 201 may receive information on a specific personal AI model of a specific person (e.g., expert or celebrity) from the server 208 through the communication module 250. The processor 220 may store the specific AI model in the memory 230. The processor 220 may identify the preference to the media stored in the memory 230 by using the specific AI model. The processor 220 may perform, based on the identified preference, a function related to the corresponding media. For example, the processor 220 may identify media preferred by the specific person among media stored in the memory 230. Alternatively, the processor 220 may compare the preference of the specific person with the preference of the user so as to provide a guide to the media through the display 260 (e.g., the display module 160 of FIG. 1).

As described above, the electronic device 201 may use the personalized personal AI model to recommend the media that matches the preference or interest or classify the media that matches the user's preference among all media items stored in the memory 230. In addition, the electronic device 201 may easily identify the media that matches the preference of other person or matches the preference of an expert among all media items stored in the memory 230.

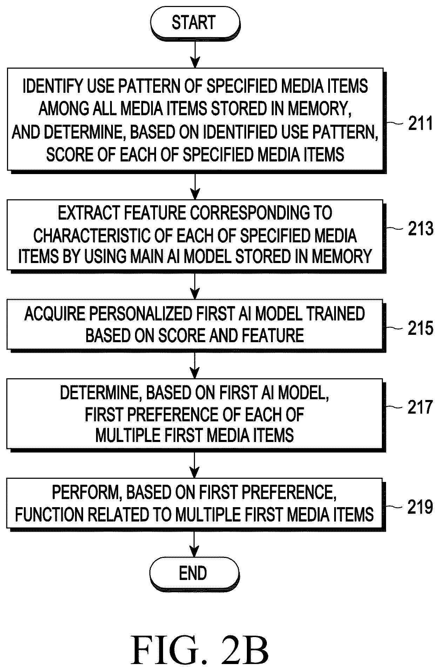

FIG. 2B is a flowchart illustrating an operation method of an electronic device according to an embodiment.

Referring to FIG. 2B, at least a part of an operation performed by an electronic device (e.g., the electronic device 201 of FIG. 2A) may be performed by a processor (e.g., the processor 220 of FIG. 2A). However, for convenience of description, it will be described that the electronic device 201 performs the corresponding operation.

According to an embodiment, in operation 211, the electronic device 201 may identify a use pattern of specified media items among all media items stored in memory (e.g., the memory 230 of FIG. 2A), and determine, based on the identified use pattern, a score of each of the specified media items. For example, the specified media items may be selected by the user, or may be automatically selected by a processor (e.g., the processor 220 of FIG. 2A). For example, the specified media items may be at least a part of all media items. For example, the electronic device 201 may identify a use pattern in consideration of at least one of viewing, sharing, editing, deleting, favorites setting, or background setting of the specified media items.

According to an embodiment, in operation 213, the electronic device 201 may extract a feature corresponding to a characteristic of each of the specified media items by using a main AI model stored in the memory 230.

According to an embodiment, in operation 215, the electronic device 201 may obtain a personalized first AI model trained based on the score and the feature. For example, the first AI model may be an AI model personalized by the user of the electronic device 201.

According to an embodiment, in operation 217, the electronic device 201 may determine, based on the first AI model, a first preference of each of multiple first media items. For example, the multiple first media items may be specified media items selected by the user directly, or automatically selected by the processor (e.g., the processor 220 of FIG. 2A) to determine the preference. For example, the multiple first media items may be at least a part of all media items stored in the memory 230. In addition, the multiple first media items may include newly obtained media items (e.g., media items newly obtained from the outside or newly captured or filmed by a camera). According to the implementation, operations 215 and 217 may be temporally separated. For example, after the first AI model is obtained by operation 215, operation 217 may not be performed immediately.

According to an embodiment, in operation 219, the electronic device 201 may perform, based on the first preference, a function related to the multiple first media items. For example, the electronic device 201 may recommend at least a part of the multiple first media items. Alternatively, the electronic device 201 may classify the multiple first media items by a category based on the first preference.

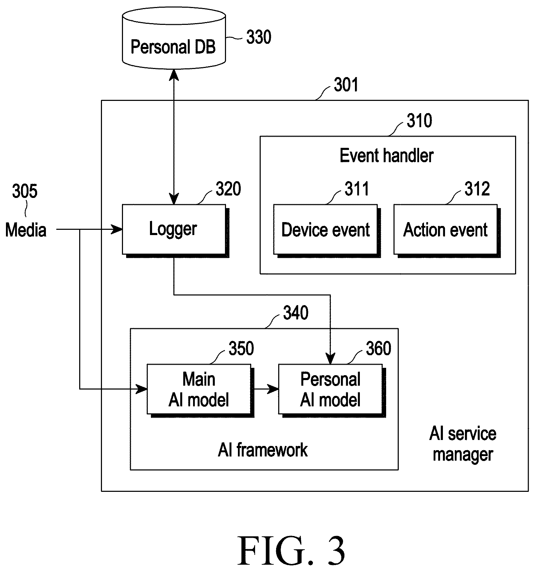

FIG. 3 is a block diagram illustrating an AI service manager executed in an electronic device according to an embodiment.

Referring to FIG. 3, according to an embodiment, the processor 220 (e.g., the processor 220 of FIG. 2A) may execute an AI service manager 301. For example, the AI service manager 301 may be a module managing a service (or a function) using an AI model. For example, the AI service manager 301 may be executed in the foreground or the background of an electronic device 201 (e.g., the electronic device 201 of FIG. 2A).

According to an embodiment, the AI service manager 301 may include an event handler 310, a logger 320, and an AI framework 340.

According to an embodiment, the event handler 310 may identify or monitor an event generated in the electronic device 201. The AI service manager 301 may identify an event generated in the electronic device 201 through the event handler 310, and may perform a specified operation based on the identified event. For example, the AI service manger 301 may perform an operation of training a personal AI model when the electronic device 201 is identified to be in an idle state. When it is identified that the electronic device 201 enters a specific place or generates a specific group, the AI service manager 301 may perform an operation of obtaining an AI model of the group. In addition, the AI service manager 301 may perform an operation of obtaining an expert AI model when the electronic device 201 performs a specific service or a specific function. Detailed methods of performing the corresponding operations by the electronic device 201 (or the AI service manager 301) will be described below.

According to an embodiment, the event handler 310 may include a device event handler 311 and an action event handler 312. For example, the device event handler 311 may obtain the state of the electronic device 201 and a new media item, and/or may identify or monitor an event related to a function related to media. The action event handler 312 may identify or monitor an event in which the electronic device 201 enters a specific place or generates a group with at least one external electronic device.

According to an embodiment, the logger 320 may identify a use pattern of a specific media item 305. For example, the use pattern of the specific media item may be based on an interaction (e.g., viewing, sharing, background setting, favorites setting, indexing, editing, and deleting) for the specific media item 305. For example, the logger 320 may identify a viewing time and/or a viewing count of the specific media item 305. The logger 320 may identify a transmission counter, an upload place, and/or a copy location of the specific media item 305. The logger 320 may identify whether a tag is specified, whether the background setting is made, or the favorites setting is made for the specific media item 305. The logger 320 may identify an edition count and/or an edition level of the specific media item 305. The logger 320 may identify whether the specific media item 305 is deleted and/or hidden.

According to an embodiment, the logger 320 may identify a score based on the use pattern of the specific media item 305. For example, the score may indicate the degree of interest (or an interest value) of the user for the specific media item 305. The logger 320 may provide the score for the specific media item 305 to an AI framework 340.

According to an embodiment, the AI framework 340 may execute and manage a main AI model 350 and a personal AI model 360.

According to an embodiment, the main AI model 350 may extract a feature for the specific media item 305. According to the implementation, the main AI model 350 may extract (or determine) an aesthetic score for the specific media item 305. For example, the aesthetic score may be a score or a value indicating the characteristic (e.g., the view angle, composition, color, or color temperature) of the specific media item 305.

According to an embodiment, the AI framework 340 may train the personal AI model by using the score and the feature for the specific media item 305. For example, the AI framework 340 may train the personal AI model so that a score for the specific media item 305 is output when the feature for the specific media item 305 is input, with reference to the main AI model. According to the implementation, the AI framework 340 may train the personal AI model by further using the aesthetic score. For example, the AI framework 340 may train the personal AI model 360 so that the score for the specific media item 305 is output when the feature and the aesthetic score for the specific media item 305 is input, with reference to the main AI model 350.

According to an embodiment, the AI framework 340 may obtain and store the personal AI model 360 as a result of the training. The AI framework 340 may store information on the personal AI model 360 in a personal data (DB) 330. For example, the personal DB may store data (e.g., the use pattern, score, feature, and aesthetic score of the specific media item 350) used to train the personal AI model. For example, the personal database 330 may be implemented as memory (e.g., the memory 230 of FIG. 2A).

According to the above-described method, the AI framework 340 may obtain the score, feature, and/or aesthetic score of each of the multiple media items stored in the memory 230. The AI framework 340 may train, based on the obtained score, feature, and/or aesthetic score, the personal AI model.

According to an embodiment, the AI framework 340 may extract or identify a preference score of the media by using the personal AI model 360. For example, the preference score may be a value indicating the degree of the user's preference determined by the personal AI model 360. The AI framework 340 may extract or identify the preference score of each of all media items stored in the memory 230 by using the personal AI model 360. Alternatively, the personal AI model 360 may extract or identify, using the personal AI model 360, the preference score of the media for which the user has requested identification.

The conventional electronic device was able to recommend the same media even all users have different preferences from each other. For example, when a tile of a specific movie is input, the electronic device was able to recommend movies having similar titles or having ratings similar to the corresponding movie even though a specific individual likes or dislikes the specific movie. To improve this, an AI model may be used.

An electronic device using the conventional AI model was able to inquire of the individual about preference of the specific media item or a score indicating the preference. However, in this case, the electronic device needed an additional UI/UX for receiving information from the user. In addition, the electronic device needed more logic to select appropriate media, the preference of which is to be asked to the user. Alternatively, the electronic device was able to obtain personal information such as a user profile from the user. In this case, a security risk for the user personal information may occur.

The electronic device 201 according to an embodiment may utilize media stored in the electronic device 201 to train an AI model to which the user's preference is reflected, and may provide various functions (e.g., a media curation service, a media sharing service, a media recommendation service, and a media classification service) related to the media through the trained AI model.

In addition, the electronic device 201 according to an embodiment may utilize, as data for AI model training, media preferred by the user or media having high interest of the user to recommend content among various media stored in the electronic device 201. To this end, the electronic device 201 may effectively select media for AI model training.

In addition, the electronic device 201 according to an embodiment may share the personalized AI model with other electronic devices. In this case, the electronic device 201 may share the user's preference through sharing of the personalized AI model even when personal information such as a user profile is not shared.

At least a part of the operations of the electronic device 201 described below may be performed by the processor 220. However, for convenience of description, it will be described that the operations are performed by the electronic device 201.

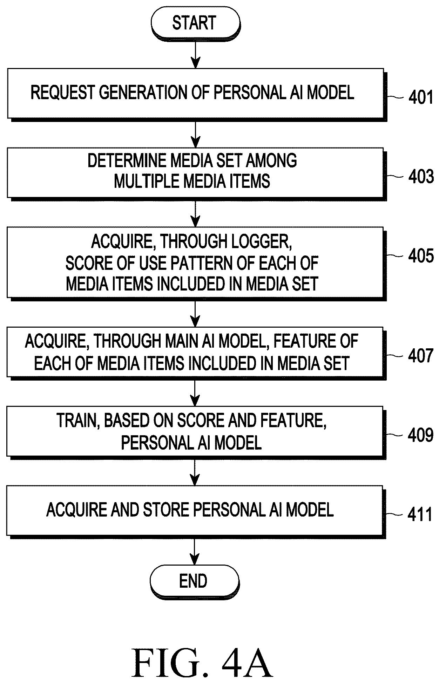

FIG. 4A is a flowchart illustrating a method of training a personal AI model by an electronic device according to an embodiment.

Referring to FIG. 4A, according to an embodiment, in operation 401, an electronic device (e.g., the electronic device 201 of FIG. 2A) may identify a request for generation of a personal AI model. For example, the electronic device 201 may identify, based on a specified event (e.g., a preference identification request or media classification request event of media) or a user input (e.g., an input of requesting generation of a personal AI model), a request for generation of a personal AI model.

According to an embodiment, in operation 403, the electronic device 201 may determine a media set for training of the personal AI model among multiple media items (e.g., all media items) stored in memory (e.g., the memory 230 of FIG. 2A). For example, the media set may include specified media items among all media items. For example, the specified media items may include a specified number of media. For example, the specified media items may be determined as media items having high frequency of use among all media items.

According to an embodiment, in operation 405, the electronic device 201 may obtain (or identify), through a logger (e.g., the logger 320 of FIG. 3), a score for a use pattern of each of the media included in the media set.

According to an embodiment, in operation 407, the electronic device 201 may obtain, through a main AI model (e.g., the main AI model 350 of FIG. 3), a feature of each of the media included in the media set. According to the implementation, the electronic device 201 may further obtain an aesthetic score of each of the media included in the media set.

According to an embodiment, in operation 409, the electronic device 201 may train, based on the score and the feature, the personal AI model. According to the implementation, the electronic device 201 may train the personal AI model by using the aesthetic score.

According to an embodiment, in operation 411, the electronic device 201 may obtain the personal AI model as a result of the training, and store the obtained personal AI model.

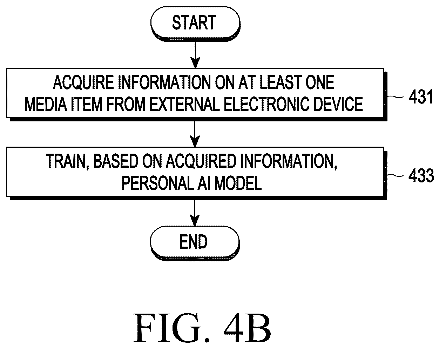

FIG. 4B is a flowchart illustrating a method in which the electronic device trains a personal AI model by using information on media received from the outside according to an embodiment.

Referring to FIG. 4B, according to an embodiment, in operation 431, an electronic device (e.g., the electronic device 201 of FIG. 2A) may obtain information on at least one media item from an external electronic device (e.g., the external electronic device 202 or 203 of FIG. 2A). In addition, the electronic device 201 may obtain information on at least one media item from a server (e.g., the server 208 of FIG. 2A). For example, the information on at least one media item may include information on at least one media item or a feature of the at least one media item.

According to an embodiment, in operation 433, the electronic device 201 may train, based on the obtained information, the personal AI model. For example, when the personal AI model is trained using a feature of a specific character (or a specific object), the personal AI model may more accurately recognize the media including the specific character. According to the implementation, the electronic device 201 may train the personal AI model by using the feature of the obtained media even through the electronic device does not directly obtain the media from the external electronic device 202 or 203 or the server 208.

Accordingly, the electronic device 201 may reinforce the performance (e.g., recognition on a specific character or a specific object) of the personal AI model.

According to an embodiment, the electronic device 201 may obtain an AI model of other person, trained for a specific character or a specific object, from the external electronic device 202 or 203 or the server 208. The electronic device 201 may more accurately recognize the media including the specific character by using the AI model of other person.

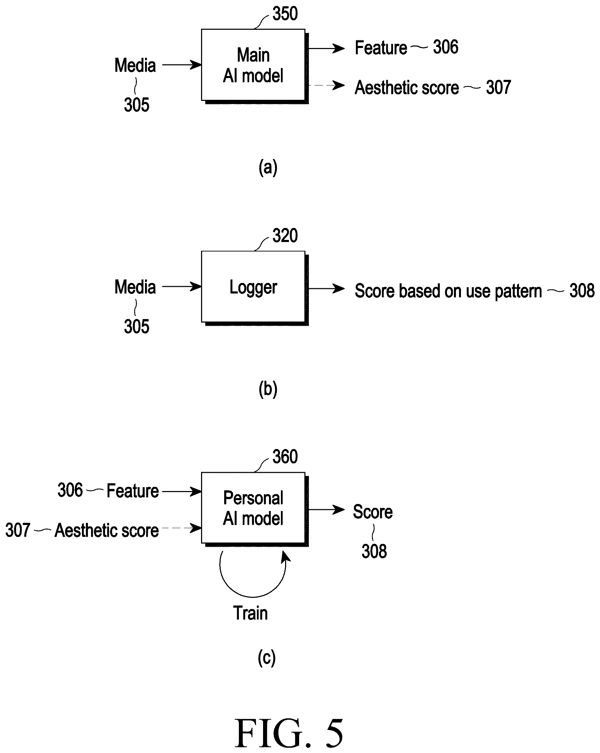

FIG. 5 illustrates a method of training a personal AI model by an electronic device according to an embodiment.

Referring to part (a) of FIG. 5, according to an embodiment, a main AI model (e.g., the main AI model 350 of FIG. 3) may extract or output a feature 306 corresponding to a specific media item 305 when the specific media item 305 is input. According to the implementation, when the specific media item 305 is input, the electronic device 201 may extract or output the feature 306 and an aesthetic score 307 corresponding to the specific media item 305.

Referring to part (b) of FIG. 5, according to an embodiment, when the specific media item 305 is input, a logger (e.g., the logger 320 of FIG. 3) may extract or output a score 308 based on a use pattern of the specific media item 305.

Referring to part (c) of FIG. 5, according to an embodiment, an operation of training a personal AI model (e.g., the personal AI model 360 of FIG. 3) by using the feature 306 and the score 307 may be performed. According to the implementation, an operation of training the personal AI model 360 by using the aesthetic score 307 may be performed.

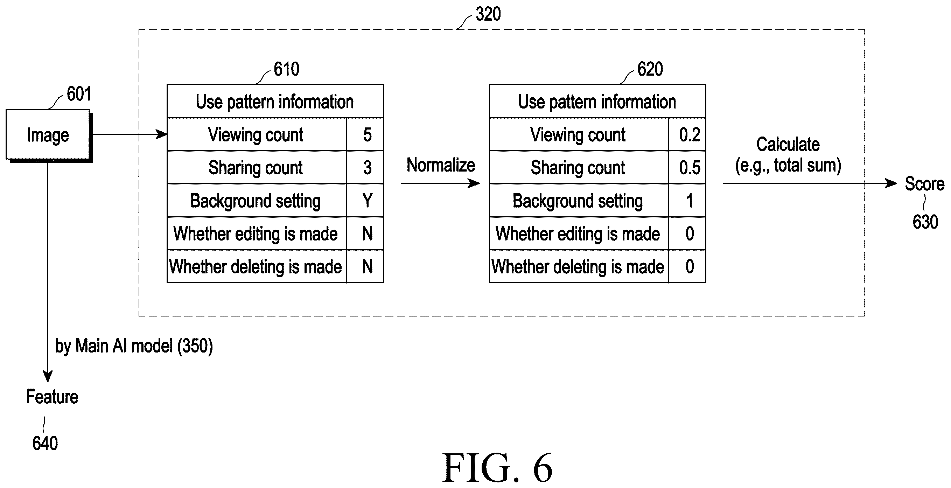

FIG. 6 illustrates a method in which an electronic device obtains a feature and a score for media for training a personal AI model according to an embodiment.

Referring to FIG. 6, according to an embodiment, an electronic device (e.g., the electronic device 201 of FIG. 2A or the logger 320 of FIG. 3) may identify a use pattern of an image 601. The electronic device 201 may obtain, based on a use pattern of an image 601, use pattern information 610. For example, the use pattern information 610 may include at least a part of information on the number of times of viewing the image 601, the number of times of sharing of the image, whether the image is set as background, whether the image is edited, or whether the image is deleted.

According to an embodiment, the electronic device 201 may normalize the use pattern information 610 to obtain normalized use pattern information 620. For example, the electronic device 201 may normalize the user pattern information 610 according to a specified rule. For example, the normalized use pattern information 620 may include values for the use pattern of the media 601.

According to an embodiment, the electronic device 201 may convert values included in the normalized use pattern information 620 into a score 630 by using a specified equation. For example, the score 630 may a score or a value based on the use pattern of the image 601. For example, the specified equation may be determined by a sum (e.g., a total sum) of the values for the use pattern of the media 601.

According to an embodiment, the electronic device 201 may obtain a feature 640 corresponding to the image 601 by using a main AI model 350.

According to the above-described method, the electronic device 201 may obtain the score 630 and the feature 640 for training the personal AI model.

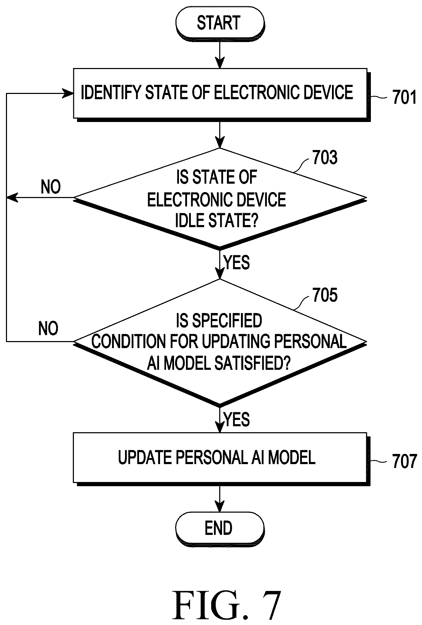

FIG. 7 is a flowchart illustrating a method of training a personal AI model by an electronic device when the state of the electronic device satisfies a specified condition according to an embodiment.

Referring to FIG. 7, according to an embodiment, in operation 701, an electronic device (e.g., the electronic device 201 of FIG. 2A) may identify the state of the electronic device 201.

According to an embodiment, in operation 703, the electronic device 201 may identify whether the state of the electronic device 201 is an idle state. For example, the idle state may mean the state in which the user is not disturbed while using the electronic device 201. For example, the idle state may mean the state in which the electronic device 201 is not being used or is being charged. The electronic device 201 may identify whether the electronic device 201 is in an idle state (e.g., the state in which there is no motion detection) through a sensor included in the electronic device 201. Alternatively, the electronic device 201 may identify, based on whether a battery (e.g., the battery 240 of FIG. 2A) is being charged, whether the electronic device 201 is in the idle state.

According to an embodiment, when the state of the electronic device 201 is identified to be the idle state (e.g., if yes in operation 703), the electronic device 201 may identify, in operation 705, whether a specified condition for updating a personal AI model is satisfied. For example, when a predetermined number of media items are newly obtained, a specified time has elapsed after the previous update, a specific period (e.g., a new media generation period and/or an idle state entering cycle) based on the user pattern of the user has elapsed, or when execution of a function related to the media is requested (e.g., identification of a media preference is requested or generation of a personal AI model for the media is requested), the electronic device 201 may determine that the specified condition is satisfied.

According to an embodiment, in operation 707, the electronic device 201 may update the personal AI model. For example, the electronic device 201 may adjust the weight applied to the personal AI model to update the personal AI model. For example, the electronic device 201 may obtain a score based on a user pattern of each of newly obtained media items, and obtain a feature of each of the newly obtained media items. Hereinafter, the electronic device 201 may additionally train the personal AI model by using the score and the feature of each of the newly obtained media items. The electronic device 201 may obtain weight values to be newly applied to the personal AI model as a result of the additional training.

According to an embodiment, the electronic device 201 may not update the personal AI model when both the conditions of operations 703 and 705 are not satisfied. However, according to the implementation, the electronic device 201 may update the personal AI model when any one of the conditions of operations 703 and 705 are satisfied.

According to the above-described method, the electronic device 201 may update the personal AI model so that the preference and the interest of the user are matched.

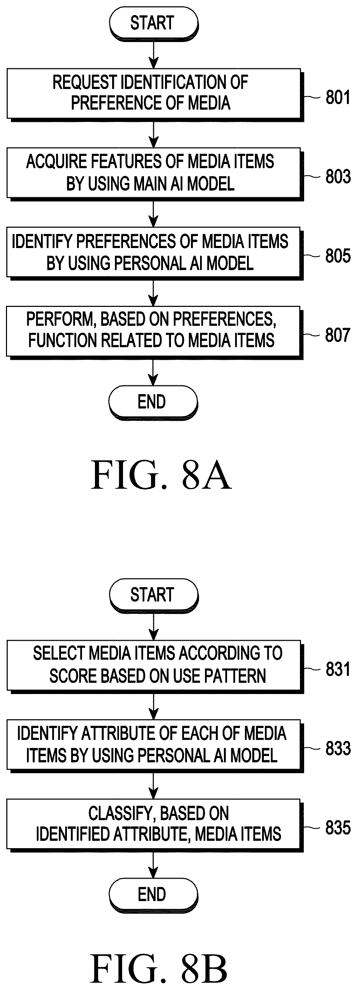

FIG. 8A is a flowchart illustrating a method in which an electronic device performs a function related to media items by using a personal AI model according to an embodiment.

Referring to FIG. 8A, according to an embodiment, in operation 801, the electronic device 201 may detect a request for identification of a preference of a specific media item.

According to an embodiment, in operation 803, the electronic device 201 may obtain a feature of each of media items by using a main AI model (e.g., the main AI model 350 of FIG. 3). For example, the electronic device 201 may input media to the main AI model 350 to obtain the feature corresponding to the media.

According to an embodiment, in operation 805, the electronic device 201 may obtain a preference of each of the media items by using a personal AI model (e.g., the personal AI model 360 of FIG. 3). For example, the electronic device 201 may input a feature corresponding to the media to the personal AI model 360 to obtain a preference of the media.

According to an embodiment, in operation 807, the electronic device 201 may perform, based on the preference obtained using the personal AI model 360, a function related to media items. For example, the electronic device 201 may recommend, based on the preference, at least one of media items to the user (e.g., recommend at least one media item that matches the preference of the user). Alternatively, the electronic device 201 may classify the media items for each category based on the preference. Alternatively, the electronic device 201 may classify the media items for each category based on the attributes of the media items.

FIG. 8B is a flowchart illustrating a method of classify media items by using a personal AI model by an electronic device according to an embodiment.

Referring to FIG. 8B, according to an embodiment, in operation 831, an electronic device (e.g., the electronic device 201 of FIG. 2A) may select some media items according to a score based on a use pattern of each of all media items stored in the memory 230.

According to an embodiment, in operation 833, the electronic device 201 may identify the attribute of each of the selected media items. For example, the attribute may include the composition (e.g., horizontal, vertical, or diagonal), tone (e.g., blue, red, green, or white), and/or color temperature (e.g., hot, warm, mild, or cold) of the media (e.g., image). The electronic device 201 may determine a score or a value for the corresponding attributes for each of the selected media items.

According to an embodiment, in operation 835, the electronic device 201 may classify, based on the identified attributes, the media items. For example, the electronic device 201 may classify media items each having a high score in the composition as composition-focused media items, and may classify media items each having a high score in the tone/color temperature as tone/color temperature-focused media items.

Through the above-described method, the electronic device 201 may provide a curation service for the media items.

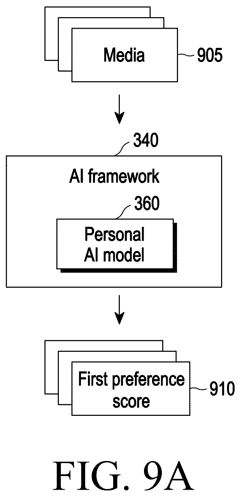

FIG. 9A illustrates an operation of identifying preferences of media items by using a personal AI model by an electronic device according to an embodiment.

Referring to FIG. 9A, according to an embodiment, an AI framework 340 may extract or identify first preference scores 910 for multiple first media items 905, respectively, by using a personal AI model 360. The AI framework 340 may generate a personal AI model or use a personal AI model (e.g., the personal DB 330 of FIG. 3) stored in the memory 230. For example, the first preference scores 910 may be scores indicating preferences of the corresponding media items determined by the personal AI model 360 personalized to a user of an electronic device (e.g., the electronic device 201 of FIG. 2A). For example, the multiple first media items 950 may be at least some of all media items stored in the memory 230.

According to an embodiment, the electronic device 201 may select and recommend at least one media item among the multiple first media items 905 by using the preference scores identified using the personal AI model. Accordingly, the electronic device 201 may automatically recommend a media item that matches the preference of the user among the multiple first media items.

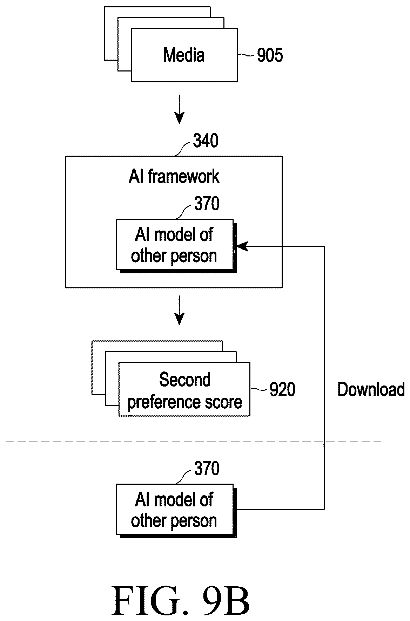

FIG. 9B illustrates an operation of identifying preferences of media items by using an AI model of other person by an electronic device according to an embodiment.

Referring to FIG. 9B, according to an embodiment, the AI framework 340 may use an AI model of other person, received or downloaded from an external electronic device (e.g., 202, 203, or 208 of FIG. 2A), rather than the personal AI model 360 of FIG. 9A. For example, the AI framework 340 may extract or identify second preference scores 920 for multiple first media items 905, respectively, by using an AI model 370 of other person. For example, the second preference scores 920 may be scores indicating preferences of the corresponding media items determined by the AI model 370 of other person, personalized to a user (e.g., other person) of an electronic device (e.g., the external electronic device 202 or 203 of FIG. 2A). Alternatively, the second preference scores 920 may be scores indicating the preferences of the corresponding media items determined by the AI model 307 of other person, personalized to an expert or a specific persona (e.g., celebrity) stored in a server (e.g., the server 208 of FIG. 2A).

According to an embodiment, the electronic device 201 may select and recommend at least one of multiple first media items 905 by using preference scores determined by the AI model of other person. For example, the electronic device 201 may provide information on the media that matches the preference of other person or the expert among the multiple first media items. Accordingly, the user can easily identify the media that matches the preference of other person or the expert through the electronic device 201.

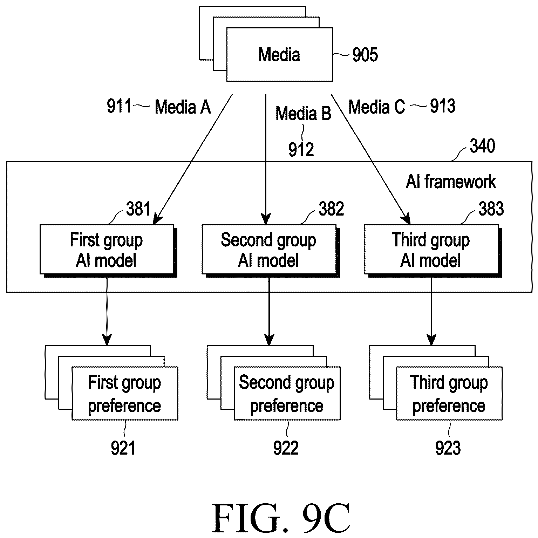

FIG. 9C illustrates an operation of identifying preferences of media items by using an AI model for each group by an electronic device according to an embodiment.

Referring to FIG. 9C, according to an embodiment, an AI framework 340 may use group-specific AI model. For example, the AI framework 340 may manage and/or execute AI models 381, 382, and 383 for multiple groups.

According to an embodiment, the AI framework 340 may extract or identify preferences of media items related to a corresponding group among multiple first media items 905 by using the group AI model 381, 382, or 383 for each of the multiple groups. For example, the first group AI model 381 may output a first group preference 921 for at least one media item A 911 related to a first group among the multiple first media items 905. For example, the first group preference 921 may be a score indicating a preference of at least one media item A 911 determined by the first group AI model 381. For example, the second group AI model 382 may output a second group preference 922 for at least one media item B 912 related to a second group among the multiple first media items 905. For example, the second group preference 922 may be a score indicating the preference of the at least one media item B 912 determined by the second group AI model 382. For example, the third group AI model 383 may output a third group preference 923 for at least one media item C 913 related to a third group among the multiple first media items 905. For example, the third group preference 923 may be a score indicating the preference of the at least one media item C 913 determined by the third group AI model 383.

According to an embodiment, the electronic device 201 may share at least one of the multiple first media items 905 with the corresponding group by using the preference score determined by the group-specific AI model 381, 382, or 383. Accordingly, the electronic device 201 easily share media that matches the preference for each group with external electronic devices included in the corresponding group. In addition, the user can easily identify and manage media that matches the preference for each group through the electronic device 201.

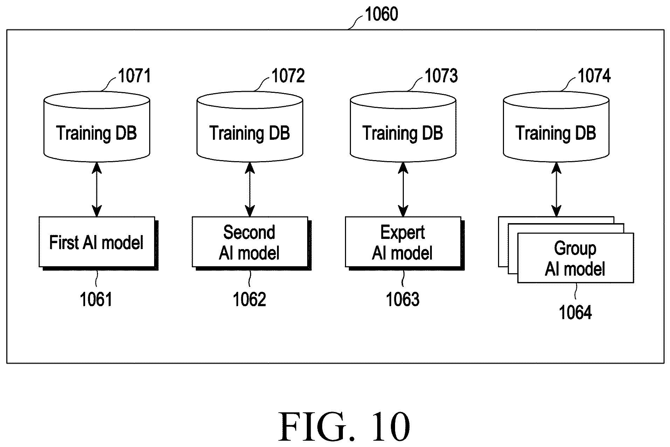

FIG. 10 illustrates an AI service manager for managing multiple AI models according to an embodiment.

Referring to FIG. 10, according to an embodiment, an AI service manager 1060 (e.g., the AI service manager 301 of FIG. 3) may manage multiple AI models 1061, 1062, 1063, and 1064. For example, the first AI model 1061 may be a personal AI model personalized by a user of the electronic device 201. The second AI model 1062 may be an AI model of other person, personalized by a user (e.g., other person) of an external electronic device (e.g., the external electronic device 202 or 203 of FIG. 2A). The expert AI model 1063 may be an expert AI model personalized by an expert, obtained from a server (e.g., the server 208 of FIG. 2A). The group AI model 1064 may be a group AI model for a group (e.g., a family group, a friend group, or a specific group) including multiple external electronic devices forming a communication connection with the electronic device 201 through communication technology. For example, the group AI model 1064 may include a separate group AI model for each group generated by the electronic device 201.

According to an embodiment, the AI service manager 1060 may manage training DBs 1071, 1072, 1073, and 1074 having trained the multiple AI models 1061, 1062, 1063, and 1064. For example, the training DBs 1071, 1072, 1073, and 1074 may store data (e.g., a feature, a score, or an aesthetic score of media) having trained a corresponding AI model.

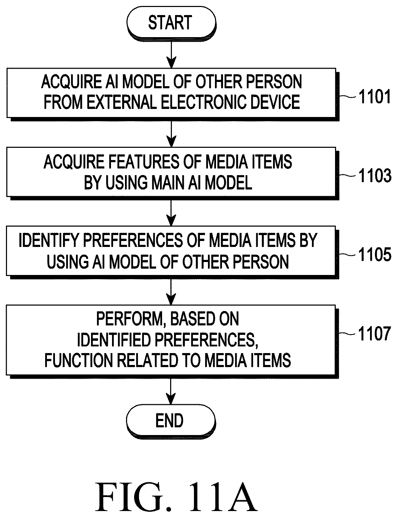

FIG. 11A is a flowchart illustrating a method of performing a function related to media items by using an AI model of other person according to an embodiment.

Referring to FIG. 11A, according to an embodiment, in operation 1101, an electronic device (e.g., the electronic device 201 of FIG. 2A) may obtain an AI model of other person from an external electronic device (e.g., the external electronic device 202 or 203 of FIG. 2A). For example, the AI model of other person may be an AI model personalized by a user (e.g., other person) of the external electronic device 202 or 203.

According to an embodiment, in operation 1103, the electronic device 201 may obtain, using a main AI model (e.g., the main AI model 350 of FIG. 3), features of media items for which the preferences are to be identified. For example, the main AI model may receive media and output a feature of the media.

According to an embodiment, in operation 1105, the electronic device 201 may identify, using an AI model of other person, preferences of media items for which the preferences are to be identified. For example, the AI model of other person may receive features of the obtained media items through the main AI model and output the preference of the corresponding media items. For example, the output preferences may be values each indicating the interest or preference of other person to the corresponding media.

According to an embodiment, in operation 1107, the electronic device 201 may perform, based on the identified preferences, a function related to media items. For example, the electronic device 201 may transmit a specified number of media items having high preference among the media items stored in the memory 230 to the external electronic device 202 or 204. Alternatively, the electronic device 201 may classify, as a category, the specified number of media items having high preferences among the media items stored in the memory 230.

According to an embodiment, the electronic device 201 may search for at least one external electronic device to which AI model of the electronic device can be shared. In this case, when multiple external electronic devices are found, the electronic device 201 may provide a list of external electronic devices. For example, the list of external electronic devices may include a representative image of an AI model shared among the external electronic devices. The electronic device 201 may obtain, from the selected external electronic device, an AI model of other person, personalized by the corresponding external electronic device.

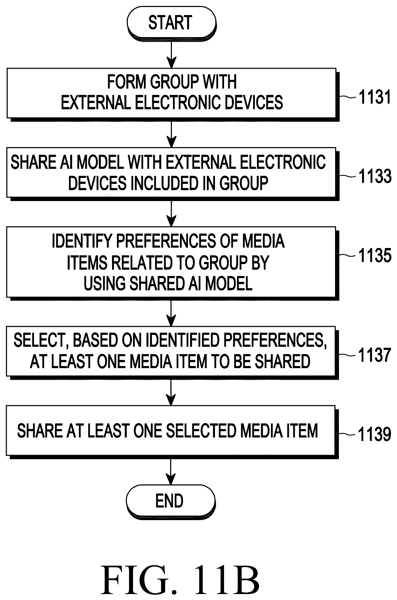

FIG. 11B is a flowchart illustrating a method of performing a function related to media items by using an AI model of a specific group according to an embodiment.

Referring to FIG. 11B, according to an embodiment, in operation 1131, an electronic device (e.g., the electronic device 201 of FIG. 2A) may form a group with external electronic devices (e.g., 202 and 203 of FIG. 2A).

According to an embodiment, in operation 1133, the electronic device 201 may share an AI model with external electronic devices included in the group. For example, the electronic device 201 may transmit a personal AI model to the external electronic devices. In addition, the electronic device 201 may also obtain an AI model from the external electronic devices. Alternatively, the electronic device 201 may separately generate a group AI model for the group.

According to an embodiment, in operation 1135, the electronic device 201 may identify preferences of media items related to a group by using a shared AI model. The electronic device 201 may share the identified preferences with external electronic devices included in the group.

According to an embodiment, in operation 1137, the electronic device 201 may select, based on the identified preferences, at least one media item to be shared with external electronic devices from among media items related to the group.

According to an embodiment, in operation 1139, the electronic device 201 may share at least one selected media item with external electronic devices included in the group. For example, the electronic device 201 may transmit at least one media item selected from the external electronic device included in the group.

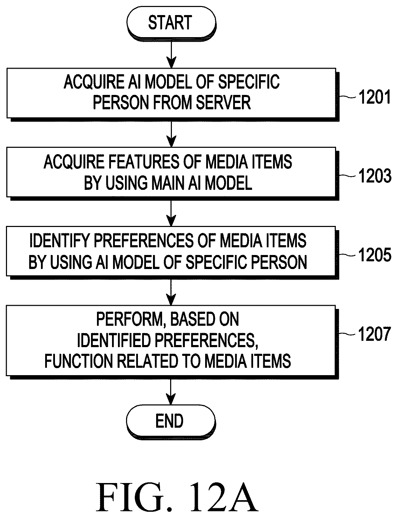

FIG. 12A is a flowchart illustrating a method of performing a function related to media items by using an AI model of a specific person according to an embodiment.

Referring to FIG. 12A, according to an embodiment, in operation 1201, an electronic device (e.g., the electronic device 201 of FIG. 2A) may obtain an AI model of a specific person from a server (e.g., the server 208 of FIG. 2A). For example, the specific person may include, but not limited to, an external or a celebrity. In this case, the AI model of the specific person may be an AI model personalized by an expert or a celebrity. The AI model of the specific person may be an AI model stored or registered in the server 208 in advance by the specific person.

According to an embodiment, in operation 1203, the electronic device 201 may obtain features of media items by using a main AI model. For example, the main AI model may receive an input of media and output a feature of the corresponding media.

According to an embodiment, in operation 1205, the electronic device 201 may identify preferences of media items by using the AI model of the specific person. For example, the AI model of the specific person may receive features for media items obtained through the main AI model, and output the preferences of the corresponding media items. For example, the output preferences may be a value indicating the interest or preference of the specific person to the corresponding media.

According to an embodiment, in operation 1207, the electronic device 201 may perform, based on the identified preferences, a function related to media items. For example, the electronic device 201 may classify, as a separate category, a specified number of media items having high preferences among the media items stored in the memory 230. Alternatively, the electronic device 201 may recommend, as expert-preferred media or celebrity-preferred media, at least one media item having a high preference among the media items stored in the memory 230.

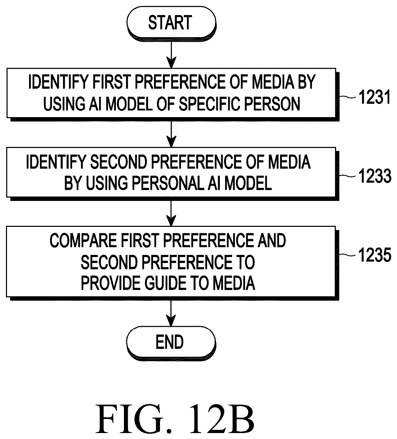

FIG. 12B is a flowchart illustrating a method of providing a guide to media by using an AI model of a specific person according to an embodiment.

Referring to FIG. 12B, according to an embodiment, in operation 1231, an electronic device (e.g., the electronic device 201 of FIG. 2A) may identify a first preference of a specific media item by using an AI model of a specific person. For example, the AI model of the specific person may be obtained from a server (e.g., the server 208 of FIG. 2A). For example, the first preference may be a score or a value indicating the preference to the specific media item determined by the AI model of the specific person.

According to an embodiment, in operation 1233, the electronic device 201 may identify a second preference of a specific media item by using a personal AI model. The second preference may be a score or a value indicating the preference to the specific media item determined by the personal AI model.

According to an embodiment, in operation 1235, the electronic device 201 may compare the first preference and the second preference to provide a guide to the specific media item. For example, the electronic device 201 may identify a difference between the first preference and the second preference. The electronic device 201 may identify a difference between the first preference and the second preference with reference to the first preference, and may provide, based on the identified difference, a guide to the specific media item. For example, the guide may include whether a specific media item is preferred (e.g., information indicating whether media is preferred or unpreferred), the degree of preference (e.g., a preference score for media), and/or correction information (e.g., whether media needs to be corrected and information on a correction method of media). For example, when an AI model of a specific person is an AI model of a photo expert and media is an image, the electronic device 201 may provide a guide to the view angle, exposure, focus, and/or white balance of the corresponding image. For example, the electronic device 201 may provide, based on the difference between the first preference and the second preference, a correction method for at least one of the view angle, exposure, focus, and white balance of the corresponding media as a guide.

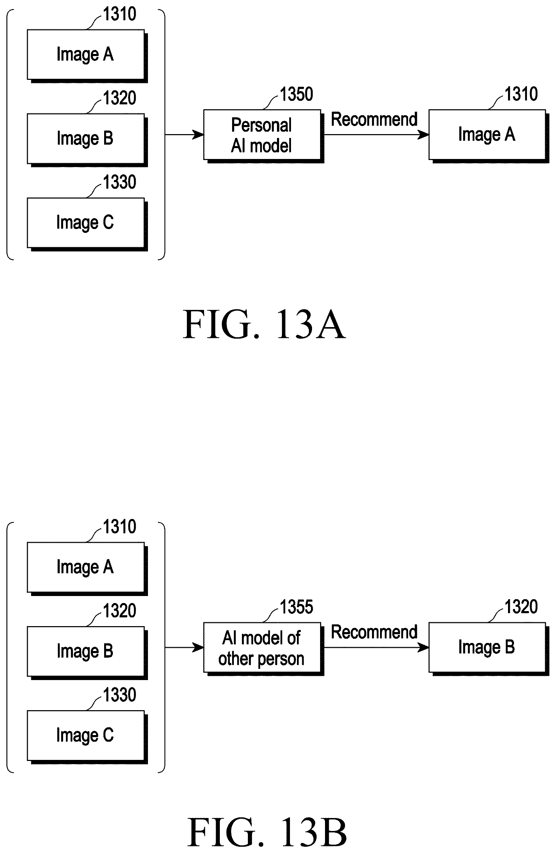

FIG. 13A illustrates a method of identifying an image preferred by a user among multiple images by using a personal AI model according to an embodiment.

Referring to FIG. 13A, according to an embodiment, an electronic device (e.g., the electronic device 201 of FIG. 2A) may identify preferences of multiple images 1310, 1320, and 1330, respectively, by using a personal AI model 1350 (e.g., the personal AI model 360 of FIG. 3). The electronic device 201 may determine as a recommended image, image A 1310 having the highest preference among the multiple images 1310, 1320, and 1330.

Accordingly, the electronic device 201 may effectively identify an image that matches the user's preference among the multiple images.

FIG. 13B illustrates a method of identifying an image preferred by other person among multiple images by using an AI model of other person according to an embodiment.

Referring to FIG. 13B, according to an embodiment, an electronic device (e.g., the electronic device 201 of FIG. 2A) may identify preferences of multiple images 1310, 1320, and 1330, respectively, by using an AI model 1355 of other person (e.g., the AI model 370 of other person of FIG. 9). The electronic device 201 may determine, as a recommended image, image B 1320 having the highest preference among the multiple images 1310, 1320, and 1330.

Accordingly, the electronic device 201 may effectively identify an image that matches the preference of other person among the multiple images. In addition, the electronic device 201 may identify information on the preference, interest, or taste of other person through the AI model of other person even though personal information of other person is not obtained.

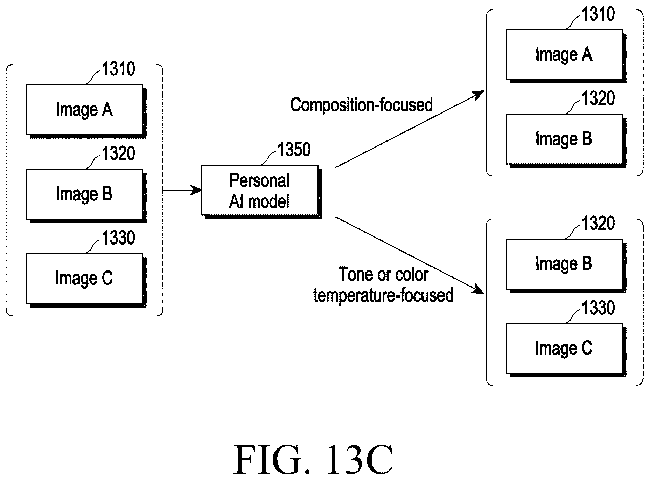

FIG. 13C illustrates a method of classifying images according to attributes of multiple images by using a personal AI model according to an embodiment.

Referring to FIG. 13C, according to an embodiment, an electronic device (e.g., the electronic device 201 of FIG. 2A) may obtain the attribute (e.g., composition, tone, or color temperature) of each of multiple images 1310, 1320, and 1330 by using a personal AI model 1355 (e.g., the personal AI model 360 of FIG. 3). The electronic device 201 may determine a score for each attribute for each of the multiple images 1310, 1320, and 1330 by using the personal AI model 1355. The electronic device 201 may classify the multiple images 1310, 1320, and 1330 according to the attribute. For example, the electronic device 201 may classify images 1310 and 1320 each having a high score in the composition among the multiple images 1310, 1320, and 1330 as composition-focused images. In addition, the electronic device 201 may classify images 1320 and 1330 each having a high score indicating the tone/color temperature among the multiple images 1310, 1320, and 1330 as tone/color temperature-focused images.

According to the above-described method, the electronic device 201 may classify the multiple images for each attribute. In addition, the electronic device 201 may also provide information on an attribute, by which the images are classified. Accordingly, the electronic device 201 may provide a curation service to the user.

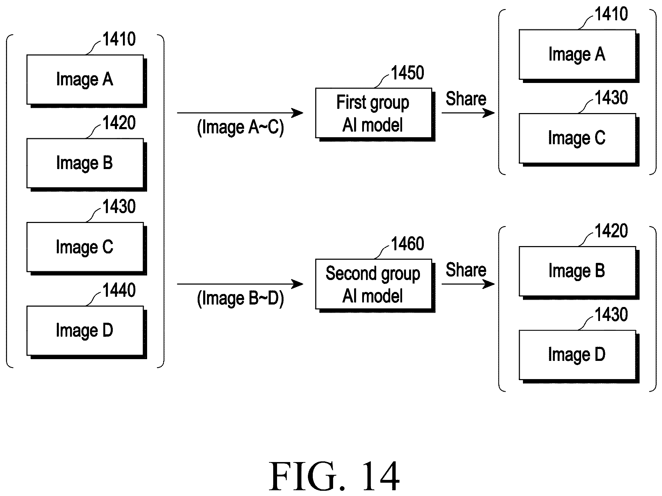

FIG. 14 illustrates a method of sharing, using a group-specific AI model, images for each corresponding group according to an embodiment.

Referring to FIG. 14, according to an embodiment, an electronic device (e.g., the electronic device 201 of FIG. 2A) may identify preferences of multiple images 1410, 1420, 1430, and 1440, respectively, by using group AI models 1450 and 1460 (e.g., group AI models 381, 382, and 383 of FIG. 9C).

According to an embodiment, the electronic device 201 may identify preferences of images 1410, 1420, and 1430 related to a first group, respectively, among the multiple images 1410, 1420, 1430, and 1440 by using a first group AI model 1450. For example, the electronic device 201 may share, based on the identified preferences, image A 1410 and image C 1430 among the images 1410, 1420, and 1430 with external electronic devices included in the first group.

According to an embodiment, the electronic device 201 may identify preferences of images 1420, 1430, and 1440 related to a second group, respectively, among the multiple images 1410, 1420, 1430, and 1440 by using a second group AI model 1460. For example, the electronic device 201 may share, based on the identified preferences, image B 1420 and image D 1440 among the images 1420, 1430, and 1440 with external electronic devices included in the second group.

According to the above-described method, the electronic device 201 may share interested images according to a group among the multiple images with external electronic devices included in the corresponding group. In addition, the electronic device 201 may identify information on the preference, interest, or taste of the group through a group AI model even though personal information of the users included in the group is not obtained.

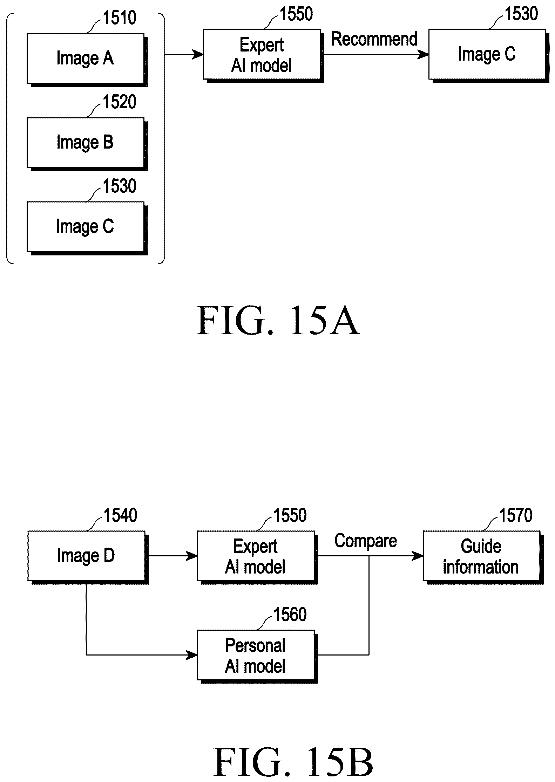

FIG. 15A illustrates a method of identifying an image preferred by an expert among multiple images by using an expert AI model according to an embodiment.

Referring to FIG. 15A, according to an embodiment, an electronic device (e.g., the electronic device 201 of FIG. 2A) may identify preferences of multiple images 1510, 1520, and 1530, respectively, by using an expert AI model 1550 (e.g., the AI model 370 of other person of FIG. 9). The electronic device 201 may determine image C 1530 having the highest preference among the multiple images 1510, 1520, and 1530 as an expert recommend image.

Accordingly, the electronic device 201 may effectively identify an image that matches the preference of an expert among the multiple images. In addition, the electronic device 201 may identify information on the preference, interest, or taste of the expert through an expert AI model without directly meeting an expert or obtaining personal information of the expert.

FIG. 15B illustrates a method of providing a guide to an image by using an expert AI model according to an embodiment.

Referring to FIG. 15B, according to an embodiment, an electronic device (e.g., the electronic device 201 of FIG. 2A) may identify a first preference of a specific image 1540 by using an expert AI model 1550 (e.g., the AI model 370 of other person of FIG. 9). The electronic device 201 may identify a second preference of a specific image 1540 by using a personal AI model 1560. The electronic device 201 may provide guide information of the specific image 1540 by comparing the first preference and the second preference. For example, the electronic device 201 may provide, based on a difference between the first preference and the second preference, guide information of the specific image 1540. For example, the electronic device 201 may provide, based on the difference between the first preference and the second preference, an improvement method for at least one of the view angle, exposure, focus, and white balance of the specific image 1540.

By utilizing the above-described method, the electronic device 201 may provide an education service or an entertainment service by using an expert AI model.

An electronic device 201 according to an embodiment may include memory 230, a communication circuit 250, a processor 220. The processor according to an embodiment may be configured to identify a use pattern of specified media items among all media items stored in the memory, and determine, based on the use pattern, a score of each of the specified media items. The processor according to an embodiment may be configured to identify a feature corresponding to a characteristic of each of the specified media items by using a main AI model stored in the memory. The processor according to an embodiment may be configured to acquire a personalized first AI model trained based on the score and the feature. The processor according to an embodiment may be configured to determine, based on the first AI model, a first preference of each of multiple first media items. The processor according to an embodiment may be configured to perform, based on the first preference, a function related to the multiple first media items.

The processor according to an embodiment may be configured to, as at least a part of the function related to the multiple first media items, recommend, based on the first reference, at least one media item among the multiple first media items

The processor according to an embodiment may be configured to classify, based on the first preference, the multiple first media items.

The processor according to an embodiment may be configured to in case that a second AI model of other person is acquired from an external electronic device 202 or 203, determine a second preference of each of the multiple first media items by using the second AI model. The processor according to an embodiment may be configured to perform, based on the second preference, a function related to at least one media item among the multiple first media items.

The processor according to an embodiment may be configured to in case that a third AI model of a specific person is acquired from a server 208, determine a third preference of at least one media item among the multiple first media items by using the third AI model. The processor according to an embodiment may be configured to compare the first preference with the third preference to provide a guide including at least one of whether the at least one media item is preferred, a degree of preference, or correction information.

The processor according to an embodiment may be configured to identify whether the electronic device is in an idle state. The processor according to an embodiment may be configured to, based on the electronic device being in the idle state, train, based on the score and the feature, the first AI model.

The processor according to an embodiment may be configured to determine, based on the score, the specified media items among all media items stored in the memory as a media set for training of the first AI model.

The processor according to an embodiment may be configured to acquire a weight related to the first AI model as a result of the training of the first AI model. The processor according to an embodiment may be configured to apply the weight to the main AI model to acquire the first AI model.

The processor according to an embodiment may be configured to identify an aesthetic score indicating the characteristic of each of the specified media items by using the main AI model. The processor according to an embodiment may be configured to train the first AI model by further using the aesthetic score in addition to the score and the feature.

The processor according to an embodiment may be configured to in case that a group is formed with multiple external electronic devices through the communication circuit, acquire an AI model from each of the multiple external electronic devices. The processor according to an embodiment may be configured to identify preferences of multiple media items related to the group by using the AI model. The processor according to an embodiment may be configured to transmit, based on the preference, at least one media item among the multiple media items to the multiple external electronic devices.

The processor according to an embodiment may be configured to acquire information on at least one media item from an external electronic device or a server. The processor according to an embodiment may be configured to train the first AI model by using information on the at least one media item.

The processor according to an embodiment may be configured to identify an attribute of each of the multiple first media items by using the first AI model. The processor according to an embodiment may be configured to classify, based on the attribute, the multiple first media items.

An operation method of an electronic device 201 according to an embodiment may include identifying a use pattern of specified media items among all media items stored in the electronic device, and determining, based on the use pattern, a score of each of the specified media items. The operation method of the electronic device according to an embodiment may include extracting a feature corresponding to a characteristic of each of the specified media items by using a main AI model stored in the electronic device. The operation method of the electronic device according to an embodiment may include acquiring a personalized first AI model trained based on the score and the feature. The operation method of the electronic device according to an embodiment may include determining, based on the first AI model, a first preference of each of multiple first media items. The operation method of the electronic device according to an embodiment may include performing, based on the first preference, a function related to the multiple first media items.

The performing of the function related to the multiple first media items according to an embodiment may include recommending, based on the first reference, at least one media item among the multiple first media items.

The performing of the function related to the multiple first media items according to an embodiment may include classifying, based on the first preference, the multiple first media items

The operation method of the electronic device according to an embodiment may include in case that a second AI model of other person is acquired from an external electronic device 202 or 203, determining a second preference of each of the multiple first media items by using the second AI model. The operation method of the electronic device according to an embodiment may further include performing, based on the second preference, a function related to at least one media item among the multiple first media items.

The operation method of the electronic device according to an embodiment may further include in case that a third AI model of a specific person is acquired from a server 208, determining a third preference of at least one media item among the multiple first media items by using the third AI model. The operation method of the electronic device according to an embodiment may include comparing the first preference with the third preference to provide a guide including at least one of whether the at least one media item is preferred, a degree of preference, or correction information.

The operation method of the electronic device according to an embodiment may further include identifying whether the electronic device is in an idle state. The operation method of the electronic device according to an embodiment may further include based on the electronic device being in the idle state, training based on the score and the feature, the first AI model.

The operation method of the electronic device according to an embodiment may further include determining, based on the score, the specified media items among all media items stored in the electronic device as a media set for training of the first AI model.

A non-transitory recording medium 130 according to an embodiment may store instructions which can perform identifying a use pattern of specified media items among all media items stored in an electronic device 201, and determining, based on the use pattern, a score of each of the specified media items, extracting a feature corresponding to a characteristic of each of the specified media items by using a main AI model stored in the memory, acquiring a personalized first AI model trained based on the score and the feature, determining, based on the first AI model, a first preference of each of multiple first media items, and performing, based on the first preference, a function related to the multiple first media items.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201) comprising:
memory (230);
a communication circuit (250); and
a processor (220),
wherein the processor is configured to:
identify a use pattern of specified media items among all media items stored in the memory, and determine a score of each of the specified media items, based on the use pattern;
extract a feature corresponding to a characteristic of each of the specified media items by using a main AI model stored in the memory;
acquire a personalized first AI model trained based on the score and the feature;
based on the first AI model, determine a first preference of each of multiple first media items; and
based on the first preference, perform a function related to the multiple first media items.

2. The electronic device of claim 1, wherein the processor is configured to, as at least a part of the function related to the multiple first media items, recommend at least one media item among the multiple first media items, based on the first reference.

3. The electronic device of one of claims 1 and 2, wherein the processor is configured to, based on the first preference, classify the multiple first media items.

4. The electronic device of one of claims 1 to 3, wherein the processor is configured to:
when a second AI model of another person is acquired from an external electronic device (202 or 203), determine a second preference of each of the multiple first media items by using the second AI model; and
based on the second preference, perform a function related to at least one media item among the multiple first media items.

5. The electronic device of one of claims 1 to 4, wherein the processor is configured to:
when a third AI model of a specific person is acquired from a server (208), determine a third preference of at least one media item among the multiple first media items by using the third AI model; and
compare the first preference with the third preference to provide a guide comprising at least one of whether the at least one media item is preferred, a degree of preference, or correction information.

6. The electronic device of one of claims 1 to 5, wherein the processor is configured to:
identify whether the electronic device is in an idle state; and
based on identifying that the electronic device is in the idle state, train the first AI model, based on the score and the feature.

7. The electronic device of one of claims 1 to 6, wherein the processor is configured to, based on the score, determine the specified media items among all the media items stored in the memory as a media set for training the first AI model.

8. The electronic device of one of claims 1 to 7, wherein the processor is configured to:
acquire a weight related to the first AI model as a result of the training of the first AI model; and
apply the weight to the main AI model to acquire the first AI model.

9. The electronic device of one of claims 1 to 8, wherein the processor is configured to:
identify an aesthetic score indicating the characteristic of each of the specified media items by using the main AI model; and
train the first AI model by further using the aesthetic score in addition to the score and the feature.

10. The electronic device of one of claims 1 to 9, wherein the processor is configured to:
when a group is formed with multiple external electronic devices through the communication circuit, acquire an AI model from each of the multiple external electronic devices;
identify preferences of multiple media items related to the group by using the AI model; and
based on the preferences, transmit at least one media item among the multiple media items to the multiple external electronic devices.

11. The electronic device of one of claims 1 to 10, wherein the processor is configured to:
acquire information on at least one media item from an external electronic device or a server; and
train the first AI model by using information on the at least one media item.

12. The electronic device of one of claims 1 to 11, wherein the processor is configured to:
identify an attribute of each of the multiple first media items by using the first AI model; and
based on the attribute, classify the multiple first media items.

13. The electronic device of one of claims 1 to 11, wherein the processor is configured to identify the use pattern in consideration of at least one of viewing, sharing, editing, deleting, favorites setting, or background setting of the specified media items.

14. An operation method of an electronic device (201), the method comprising:
identifying a use pattern of specified media items among all media items stored in the electronic device, and based on the use pattern, determining a score of each of the specified media items;
extracting a feature corresponding to a characteristic of each of the specified media items by using a main AI model stored in the electronic device;
acquiring a personalized first AI model trained based on the score and the feature;
based on the first AI model, determining a first preference of each of multiple first media items; and
based on the first preference, performing a function related to the multiple first media items.

15. The method of claim 14, wherein the performing of the function related to the multiple first media items comprises recommending at least one media item among the multiple first media items, based on the first reference.
